# NOUVEAU FASCICULE DE BREVET EUROPEEN

(11) **EP 1 189 989 B2**
(45) Date de publication et mention de la décision concernant l'opposition: **23.05.2007**
(45) Mention de la délivrance du brevet: 03.09.2003
(21) Numéro de dépôt: 00935088.5
(22) Date de dépôt: 22.05.2000
(51) Int. Cl.: C08L 77/00, C08K 5/3492, C08K 5/00, C08L 61/06

(54) **COMPOSITION DE POLYAMIDE IGNIFUGEE**
FLAMMHEMMENDE POLYAMID-ZUSAMMENSETZUNG
FIRE-RESIST TREATED POLYAMIDE COMPOSITION

(30) Priorité: 04.06.1999 FR 9907230
(43) Date de publication de la demande: 27.03.2002
(73) Titulaire: Rhodia Engineering Plastics Srl, 20020 Ceriano Laghetto (MI) (IT)
(72) Inventeur: GALLI, Daniele, I-22066 Mariano Comense (IT)
(74) Mandataire: Esson, Jean-Pierre
(86) Numéro de dépôt international: PCT/EP2000/004612
(87) Numéro de publication internationale: WO 2000/075232

(56) Documents cités:
- EP-A- 1 340 790
- WO-A-00/02869
- WO-A-96/09344
- DE-A- 4 308 534
- GB-A- 2 151 237
- US-A- 4 177 185
- US-A- 4 244 858

## Description

La présente invention concerne une composition polyamide ignifugée notamment utilisable pour la fabrication d'articles moulés.

Elle concerne plus particulièrement une composition polyamide ignifugée par un système ignifugeant sans halogène ni phosphore.

Les compositions à base de résine polyamide sont utilisées pour la réalisation d'articles par différents procédés de mise en forme désignés par le terme générique "moulage". Ces articles sont utilisés dans de nombreux domaines techniques. Parmi ceux-ci la réalisation de pièces de systèmes électriques ou électroniques est une application importante requérant des propriétés particulières. Ainsi, ces pièces doivent présenter des propriétés mécaniques élevées mais également des propriétés de résistance chimique, d'isolation électrique et surtout une résistance au feu élevée.

L'ignifugation des compositions à base de résine polyamide a été étudiée depuis très longtemps. Ainsi, les ignifugeants principaux utilisés sont le phosphore rouge et, des composés halogénés tels que le dibromophénol, les polybromodiphényles, les polybromodiphénoxydes, et le polystyrènes bromés. Depuis une vingtaine d'années, une nouvelle classe d'ignifugation a été trouvée, à savoir, des composés organiques azotés appartenant à la classe des triazines telles que la mélamine ou ses dérivés comme le cyanurate de mélamine et plus récemment les phosphates, polyphosphates et pyrophosphates de mélamine.

L'avantage de cette dernière classe d'ignifugeants réside dans le fait que les composés concernés ne contiennent pas d'halogènes ni de phosphore libre. En effet, les ignifugeants contenant des halogènes ou du phosphore rouge peuvent générer des gaz ou vapeurs toxiques lors de la combustion de la composition polyamide. Les quantités de composés de mélamine nécessaires pour obtenir une ignifugation satisfaisante sont très élevées, notamment pour les compositions contenant des charges de renfort sous forme de fibres telles que les fibres de verre, les fibres minérales ou les fibres organiques thermostables. Le coût de ces compositions dû aux fortes quantités de composé de mélamine rend leur commercialisation peu intéressante. De plus cette concentration élevée en composé de mélamine présente certains inconvénients notamment pendant la fabrication de la composition, tels que la production de vapeur des composés mélaminés, ou pendant la production des articles moulés, tels que l'obstructions des conduits de ventilation et des dépôts dans les moules.

La demande de brevet WO98/45364 propose d'ajouter aux systèmes d'ignifugation un catalyseur de carbonisation afin de permettre de diminuer la quantité de composé de mélamine utilisée. Cette solution demeure toutefois onéreuse et de plus ne permet pas de diminuer au dessous de 15% en poids la quantité de mélamine utilisée.

La présente invention a pour objectif de proposer un nouveau système d'ignifugation à base de composés de mélamine avec une teneur en composé de mélamine relativement faible.

A cet effet, l'invention propose une composition à base de polyamide comprenant un système d'ignifugation caractérisée en ce que ce système d'ignifugation contient un dérivé de mélamine et une résine novolaque.

Par résine novolaque on entend les composés polyhydroxy, par exemple les produits de condensation de composés phénoliques avec des aldéhydes. Ces réactions de condensation sont généralement catalysées par un acide. Les composés phénoliques peuvent être choisis seuls ou en mélange parmi le phénol, le crésol, le xylénol, le naphtol, les alkyphénols ou tout autre phénol substitué. L'aldéhyde le plus fréquemment utilisé est le formol. On peut toutefois en utiliser d'autres, tels que l'acétaldéhyde, le butyraldéhyde, le crotonaldéhyde, le glycoxal. Ces listes n'ont aucun caractère limitatif. Le degré de polycondensation de la résine doit être suffisamment élevé, de façon à ce que la quantité de composés volatils soit suffisamment faible. Le degré de polycondensation est par exemple supérieur à 2. Il n'y a pas de limite supérieure au degré de polycondensation de la résiné novolaque utilisée, si ce n'est que ladite résine doit être thermoplastique. Les résines utilisées ont avantageusement un poids moléculaire supérieur à 1000 g/mol, de préférence supérieur à 10000 g/mol.

La concentration pondérale en dérivé de mélamine est comprise entre 1 et 20 % par rapport au poids total de la composition à base de polyamide et la concentration pondérale en résine novolaque est avantageusement comprise entre 1 et 20 % par rapport au poids total de la composition.

La concentration pondérale en composé de mélamine peut par exemple être comprise entre 6 et 15 % par rapport au poids total de la composition avec une concentration pondérale en résine novolaque supérieure à 5%, par exemple comprise en 6 et 20 %, de préférence entre 10 et 20%, par rapport au poids total de la composition. Selon un mode de réalisation avantageux de l'invention, les compositions ignifugées contiennent un polymère élastomère du type de ceux pouvant contribuer à une amélioration de la résistance au choc. Il n'y a pas de limitation au type d'élastomère pouvant être utilisé. Notamment tous les élastomères connus pour le renfort de la résistance au choc des polyamides peuvent être utilisés. Des exemples d'élastomères convenables sont les éthylène-ester acrylique-anhydride maléïque, les éthylène-propylène-anhydride maléïque, les EPDM (ethylène-propylène-diène momonère) avec éventuellement un anhydride maléïque greffé. La concentration pondérale en élastomère est avantageusement comprise entre 0,1 et 15% par rapport au poids total de la composition.

Une des compositions préférées selon l'invention est une composition contenant un dérivé de mélamine en concentration pondérale comprise entre 7 et 13 %, une résine novolaque en concentration pondérale comprise entre 10 et 20 % et un élastomère en concentration pondérale comprise entre 0,1 et 4 %, les concentrations pondérales étant exprimées par rapport au poids total de la composition.

Selon une autre caractéristique de l'invention, le système ignifugeant comprend un composé comprenant au moins une fonction acide carboxylique et présentant une tension de vapeur faible aux températures de mélange avec la matrice polymérique notamment pendant le procédé de fabrication du mélange, par exemple à des températures comprises entre 200°C et 350°c. Comme exemples d'acides carboxyliques convenables, on peut citer les acides monocarboxyliques, tels que l'acide myristique, l'acide palmitique, l'acide stéarique, l'acide béhénique, l'acide benzoïque, l'acide salicylique et généralement les acides monocarboxyliques comprenant un nombre d'atomes de carbone supérieur à 10, les acides dicarboxyliques tels que l'acide oxalique, l'acide malonique, l'acide succinique, l'acide glutarique, l'acide adipique, l'acide pymélique, l'acide decanedioïque, l'acide dodécanedioïque, l'acide isophtalique, l'acide téréphtalique, ou polycarboxyliques tels que l'acide trimésique. Ce composé, par une action de diminution des longueurs de chaîne du polyamide quand celui-ci est fondu par la flamme, provoque des formations de gouttes de faible dimension donc présentant un rapport élevé surface/masse. Ainsi, la température de ces gouttes diminuera très rapidement et elles ne pourront plus enflammer les éléments avec lesquels elles rentrent en contact.

Avantageusement, l'acide mono-, di ou polycarboxylique est présent à une concentration pondérale comprise entre 0,01 % et 3 % par rapport à la résine polyamide, de préférence comprise entre 0,05 % et 1%.

Le polyamide est choisi dans le groupe comprenant les polyamides obtenus par polycondensation d'un diacide carboxylique linéaire avec une diamine linéaire ou cyclique comme le PA 6.6., PA.6.10, PA 6.12, PA 12.12, PA 4.6, MXD 6 ou entre un diacide carboxylique aromatique et une diamine linéaire ou aromatique comme les polytéréphtalamides, polyisophtalamides, polyaramides, les polyamides obtenus par polycondensation d'un aminoacide sur lui-même, l'amino-acide pouvant être généré par l'ouverture hydrolytique d'un cycle lactame tels que, par exemple PA 6, PA 7, PA 11, PA 12. Le procédé de l'invention est également convenable pour traiter les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

Les composés ou dérivés de mélamine convenables pour l'invention sont choisis dans le groupe comprenant le cyanurate de mélamine décrit dans les brevets japonais JP-A-53/51250, JP-A-54/118454 ou JP-A-54/16565, les phosphates, polyphosphates et pyrophosphates de mélamine décrits dans le brevets WO 9609344. Le composé Utilisé de préférence pour la réalisation des compositions selon l'invention est le polyphosphate de mélamine.
Sa concentration pondérale est avantageusement inférieure à 25% par rapport au poids total de la composition, de préférence inférieure à 20%.

Selon une autre caractéristique de l'invention, la composition comprend des charges de renfort choisies dans le groupe comprenant des fibres de verre, fibres minérales, par exemple la wollastonite, fibres céramiques, fibres organiques thermorésistantes comme les fibres en polyphtalamide, charges minérales telles que le kaolin.

La concentration pondérale des charges de renfort est comprise avantageusement entre 1 % et 50 % en poids par rapport au poids total de la composition, de préférence entre 15 et 50%.

Les compositions de l'invention peuvent comprendre tous les additifs habituellement utilisés dans les compositions à base de polyamide utilisées pour la fabrication d'articles moulés. Ainsi, on peut citer à titre d'exemple d'additifs les stabilisants thermiques, les stabilisants U.V., les antioxydants, les lubrifiants, les pigments, colorants, plastifiants ou des agents modifiant la résilience.

A titre d'exemple, les antioxydants et stabilisants chaleur sont, par exemple, des halogénures d'alcalins, des halogénures de cuivre, les composés phénoliques stériquement encombrés, les amines aromatiques.

Les stabilisants U.V. sont généralement des benzotriazoles, des benzophénones ou des HALS.

Les compositions peuvent de plus comprendre en combinaison d'autre composés connus pour leurs propriétés ignifugeantes, comme par exemple les composés à base de phosphore rouge, les hydroxydes d'alcalino-terreux comme l'hydroxyde de Magnésium. Le système d'ignifugation peut aussi comprendre du trioxyde de molybdène, par exemple en concentration pondérale comprise entre 1 et 5% par rapport au poids total de la composition.

Les compositions de l'invention sont obtenues par mélange des différents constituants généralement dans une extrudeuse mono ou bivis, à une température suffisante pour maintenir la résine polyamide en milieu fondu. Généralement, le mélange obtenu est extrudé sous forme de joncs qui sont coupés en morceaux pour former des granulés.

L'addition des additifs ou du système ignifugeant peut être réalisée par ajout de ces composés dans le polyamide fondu sous forme pure ou sous forme de mélange concentré dans une résine telle que par exemple une résine polyamide.

Les granulés obtenus sont utilisés comme matière première pour alimenter les procédés de fabrication d'articles moulés tels que les procédés d'injection, d'extrusion, d'extrusion-soufflage.

Ainsi, la composition de l'invention convient particulièrement pour la fabrication d'articles utilisés dans le domaine de la connectique électrique ou électronique tels que éléments de disjoncteurs, interrupteurs, connecteurs ou analogues.

Les propriétés des compositions de l'invention sont déterminées sur des éprouvettes, selon les méthodes suivantes :
- Résistance à la flamme - test UL-94 selon la procédure des "Underwriters Laboratories" Ce test est réalisé avec des éprouvettes d'épaisseur de 3,2, 1,6 mm et 0,8 mm.
   Le résultat est codifié comme suit:
   → N.C.: non classé (ignifugation faible)
   → V-2: le temps moyen de combustion est inférieur à 25 secondes (auto-extinction), goutte de polyamide enflammant le coton
   → V-1: temps moyen de combustion inférieur à 25 secondes (auto-extinction), pas d'inflammation du coton par la goutte
   → V-0: temps moyen de combustion inférieur à 5 secondes (auto-extinction), pas d'inflammation du coton
- Résistance au fil incandescent mesurée selon la norme IEC 695-2-1 sur des éprouvettes d'épaisseur 3,0 mm ; 1,6 mm et 1 mm.

Les propriétés mécaniques sont déterminées selon les méthodes suivantes :
- résistance à la traction selon la norme ISO R 527 après conditionnement de l'éprouvette à 23°C et une humidité relative de 50 %
- allongement à la rupture selon la norme ISO 527
- module selon la norme ISO 527
- résistance aux chocs IZOD selon la norme ISO 179/leU
- résistance aux chocs CHARPY selon la norme ISO 179/leA

L'invention est illustrée par les exemples ci-dessous donnés uniquement à titre indicatif et sans effet limitant sur la portée de l'invention.

Différentes compositions ont été fabriquées par mélange de polyamide avec un polyphosphate de mélamine, du trioxyde de molybdène et des fibres de verre.

Le mélange est réalisé dans une extrudeuse double vis à une température de 250°C. Le mélange est extrudé sous forme de joncs pour former des granulés par coupe de ces granulés.

Les matériaux utilisés sont :
- Polyamide A :: polyhexaméthylène adipamide (PA 6.6) commercialisé sous le nom commercial "Tecnonylon27 A 00"
- Composé de mélamine B :: Polyphosphate de mélamine commercialisé sous le nom commercial "MELAPUR 200"
- Résine Novolaque C :: Novolac SIRFEN 01100 commercialisée par la société Bakelite Italia S.p.A.
- Fibres de verre D :: fibres de verre de diamètre 10 µm, sous forme de "chopped strands" commercialisées sous le nom commercial "FV-R123"
- Elastomère: E LOTADER 3210 commercialisé par Elf Atochem
F EXXELOR VA 1801 commercialisé par Exxon Chemicals.
- Trioxyde de Molybdène G:: Molybdenum trioxyde MFR commercialisé par CLYMAX MOLYBDENUM USA.

La concentration en pourcentage pondéral de chaque composant et les propriétés mécaniques et d'ignifugation de chaque composition sont indiquées dans le tableau ci-dessous :

| Exemple | 1 | 2 | 3 | 4 | 5 | 8 | 7 | 8 | 9 | 10 | 11 | 12 | 13 |
|---|---|---|---|---|---|---|---|---|---|---|---|---|---|
| A | 50 | 55 | 50 | 35 | 80 | 45 | 40 | 45 | 50 | 47 | 47 | 45 | 55 |
| B | 25 | 20 | 20 | 15 | 15 | 15 | 15 | 15 | 10 | 10 | 10 | 10 | 5 |
| C | 0 | 0 | 5 | 5 | 10 | 15 | 15 | 10 | 15 | 15 | 15 | 15 | 15 |
| D | 25 | 25 | 25 | 25 | 25 | 25 | 25 | 25 | 25 | 25 | 25 | 25 | 25 |
| E | 0 | 0 | 0 | 0 | 0 | 0 | 5 | 0 | 0 | 3 | 0 | 5 | 0 |
| F | 0 | 0 | 0 | 0 | 0 | 0 | 0 | 0 | 0 | 0 | 3 | 0 | 0 |
| G | 0 | 0 | 0 | 0 | 0 | 0 | 0 | 5 | 0 | 0 | 0 | 0 | 0 |
| Résistance aux chocs Charpy entaillés KJ/m² | 5.0 | 5.4 | 3.9 | 4.2 | 4.3 | 5.8 | 5.1 | 5.8 | Non mesuré | 5.4 | 5:4 | Non mesuré | Non mesuré |
| Résistance aux chocs Charpy non entaillés KJ/m² | 38.7 | 41.8 | 18 | 31 | 31 | 22 | 38 | 28 | Non mesuré | 22 | 23 | Non mesuré | Non mesuré |
| Résistance à la traction | 150 | 156 | 100 | 159 | 161 | 122 | 150 | 140 | 121 | 113 | 128 | 118 | 118 |
| Allongement à la rupture % | 1.7 | 1.9 | 1 | 20 | 1.7 | 1.1 | 1.7 | 1.2 | 1.1 | 1.2 | 1.5 | 1.3 | 1.2 |
| Module Mpa | 11560 | 10600 | 12435 | 10620 | 11070 | 11370 | 10800 | 12220 | 10750 | 9950 | 9650 | 9700 | 9950 |
| Test UL-943.2/1.6/0.8mm | V0/V0/V1 | V0/V1/NC | V0/V0/V1 | V0/V1/NC | V0/V0/NC | V0/V0/V0 | V0/V0/V0 | V0/V0/V0 | V0/V1/NC | V0/V0/NC | V0/V0/NC | V0/V1/NC | V1/NC/NC |
| Test au filament | 960/960/ | 960/960/ | 960/960/ | 960/960/ | 960/960/ | 960/960/ | 960/960 | 960/960 | Non mesuré | 960/960/ | 960/960/ | Non mesuré | Non mesuré |
| Incandescent à 3/1.8/1 mm | 960 | 960 | 960 | 960 | 960 | 960 | 960 | 960 | | 960 | 960 | | |

| | | | | | | | | | | | | | |
|---|---|---|---|---|---|---|---|---|---|---|---|---|---|
| (*) Non Classable | | | | | | | | | | | | | |

Ces essais montrent que la présence de résine novolaque permet de diminuer la quantité de mélamine tout en gardant des propriétés d'ignifugation satisfaisantes, c'est à dire un classement V0 pour des éprouvettes de 1,6 mm d'épaisseur.

## Revendications

1. Composition à base de polyamide comprenant un système d'ignifugation **caractérisée en ce que** ledit système d'ignifugation contient entre 1 et 20 % en poids d'un dérivé de mélamine par rapport au poids total de la composition et une résine novolaque.

2. Composition selon la revendication 1, **caractérisée en ce que** la concentration pondérale en dérivé de mélamine est comprise entre 1 et 20 % en poids par rapport au poids total de la composition et **en ce que** la concentration pondérale en résine novolaque est comprise entre 1 et 20 % en poids par rapport au poids total de la composition.

3. Composition selon l'une des revendications précédentes, **caractérisée en ce que** la concentration pondérale en dérivé de mélamine est comprise entre 6 et 15 % en poids par rapport au poids total de la composition et **en ce que** la concentration pondérale en résine novolaque est comprise entre 6 et 20 % en poids par rapport au poids total de la composition.

4. Composition selon l'une des revendications précédentes, **caractérisée en ce que** la concentration pondérale en dérivé de mélamine est comprise entre 6 et 15 % en poids par rapport au poids total de la composition et **en ce que** la concentration pondérale en résine novolaque est comprise entre 10 et 20 % en poids par rapport au poids total de la composition.

5. Composition selon l'une des revendications précédentes, **caractérisée en ce qu'**elle comprend un élastomère.

6. Composition selon la revendication 5, **caractérisée en ce** la concentration pondérale de l'élastomère est comprise entre 0,1 et 15 % par rapport au poids total de la composition.

7. Composition selon l'une des revendications 5 ou 6 **caractérisée en ce que** la concentration pondérale en dérivé de mélamine est comprise entre 7 et 13 % par rapport au poids total de la composition, **en ce que** la concentration pondérale en résine novolaque est comprise entre 10 et 20 % par rapport au poids total de la composition, et **en ce que** la concentration pondérale en élastomère est comprise entre 0,1% et 4%.

8. Composition selon l'une des revendications précédentes **caractérisée en ce que** le dérivé de mélamine est choisi dans le groupe comprenant le cyanurate de mélamine, le phosphate de mélamine, les polyphosphates ou pyrophosphates de mélamine.

9. Composition selon la revendication 8 **caractérisée en ce que** le dérivé de mélamine est le polyphosphate de mélamine.

10. Composition selon l'une des revendications précédentes, **caractérisée en ce qu'**elle comprend une charge de renfort choisie dans le groupe comportant les fibres de verre, fibres minérales, fibres organiques résistantes à la chaleur.

11. Composition selon l'une des revendications précédentes, **caractérisée en ce que** le système ignifugeant comprend un acide mono, di ou polycarboxylique.

12. Composition selon la revendication 11, **caractérisée en ce que** l'acide mono, di ou polycarboxylique est présent à une concentration pondérale comprise entre 0,01 % et 3 % par rapport à la résine polyamide.

13. Composition selon la revendication 11 ou 12, **caractérisée en ce que** l'acide précité est choisi dans le groupe comprenant l'acide myristique, l'acide palmitique, l'acide stéarique, l'acide béhénique, l'acide benzoïque, l'acide salicylique, l'acide oxalique, l'acide malonique, l'acide succinique, l'acide glutarique, l'acide adipique, l'acide pymélique, l'acide décanedioïque, l'acide dodécanedioïque, l'acide isophtalique, l'acide téréphtalique, l'acide trimésique.

14. Article obtenu par moulage, mise en forme d'une composition selon l'une des revendications 1 à 13.

## Claims

1. Polyamide-based composition comprising a fire-retardation system, **characterized in that** the said fire-retardation system contains between 1 and 20% by weight of a melamine derivative with respect to the total weight of the composition and a novolac resin.

2. Composition according to Claim 1, **characterized in that** the weight concentration of melamine derivative is between 1 and 20% by weight with respect to the total weight of the composition and **in that** the weight concentration of novolac resin is between 1 and 20% by weight with respect to the total weight of the composition.

3. Composition according to either of the preceding claims, **characterized in that** the weight concentration of melamine derivative is between 6 and 15% by weight with respect to the total weight of the composition and **in that** the weight concentration of novolac resin is between 5 and 20% by weight with respect to the total weight of the composition.

4. Composition according to one of the preceding claims, **characterized in that** the weight concentration of melamine derivative is between 6 and 15% by weight with respect to the total weight of the composition and **in that** the weight concentration of novolac resin is between 10 and 20% by weight with respect to the total weight of the composition.

5. Composition according to one of the preceding claims, **characterized in that** it contains an elastomer.

6. Composition according to Claim 5, **characterized in that** the weight concentration of the elastomer is between 0.1 and 15% with respect to the total weight of the composition.

7. Composition according to either of Claims 5 and 6, **characterized in that** the weight concentration of melamine derivative is between 7 and 13% with respect to the total weight of the composition, **in that** the weight concentration of novolac resin is between 10 and 20% with respect to the total weight of the composition and **in that** the weight concentration of elastomer is between 0.1% and 4%.

8. Composition according to one of the preceding claims, **characterized in that** the melamine derivative is chosen from the group comprising melamine cyanurate, melamine phosphate and melamine polyphosphates or pyrophosphates.

9. Composition according to Claim 8, **characterized in that** the melamine derivative is melamine polyphosphate.

10. Composition according to one of the preceding claims, **characterized in that** it includes a reinforcing filler chosen from the group comprising glass fibres, mineral fibres and heat-resistant organic fibres.

11. Composition according to one of the preceding claims, **characterized in that** the fire-retardant system contains a mono-, di- or polycarboxylic acid.

12. Composition according to Claim 11, **characterized in that** the mono-, di- or polycarboxylic acid is present in a weight concentration of between 0.01% and 3% with respect to the polyamide resin.

13. Composition according to Claim 11 or 12, **characterized in that** the aforementioned acid is chosen from the group comprising myristic acid, palmitic acid, stearic acid, behenic acid, benzoic acid, salicylic acid, oxalic acid, malonic acid, succinic acid, glutaric acid, adipic acid, pimelic acid, decanedioic acid, dodecanedioic acid, isophthalic acid, terephthalic acid and trimesic acid.

14. Article obtained by moulding or forming a composition according to one of Claims 1 to 13.

## Patentansprüche

1. Zusammensetzung auf Polyamidbasis, die ein Flammhemmsystem umfasst, **dadurch gekennzeichnet, dass** das Flammhemmsystem zwischen 1 und 20 Gew.% eines Melaminderivats, bezogen auf das Gesamtgewicht der Zusammensetzung, und ein Novolakharz enthält.

2. Zusammensetzung nach Anspruch 1, **dadurch gekennzeichnet, dass** die Gewichtskonzentration des Melaminderivats zwischen 1 und 20 Gew.%, bezogen auf das Gesamtgewicht der Zusammensetzung, liegt und dass die Gewichtskonzentration des Novolakharzes zwischen 1 und 20 Gew.%, bezogen auf das Gesamtgewicht der Zusammensetzung, liegt.

3. Zusammensetzung nach einem der vorstehenden Ansprüche, **dadurch gekennzeichnet, dass** die Gewichtskonzentration des Melaminderivats zwischen 6 und 15 Gew.%, bezogen auf das Gesamtgewicht der Zusammensetzung, liegt und dass die Gewichtskonzentration des Novolakharzes zwischen 6 und 20 Gew.%, bezogen auf das Gesamtgewicht der Zusammensetzung, liegt.

4. Zusammensetzung nach einem der vorangehenden Ansprüche, **dadurch gekennzeichnet, dass** die Gewichtskonzentration des Melaminderivats zwischen 6 und 15 Gew.%, bezogen auf das Gesamtgewicht der Zusammensetzung, liegt und dass die Gewichtskonzentration des Novolakharzes zwischen 10 und 20 Gew.%, bezogen auf das Gesamtgewicht der Zusammensetzung, liegt.

5. Zusammensetzung nach einem der vorangehenden Ansprüche, **dadurch gekennzeichnet, dass** sie ein Elastomer umfasst.

6. Zusammensetzung nach Anspruch 5, **dadurch gekennzeichnet, dass** die Gewichtskonzentration des Elastomeren zwischen 0,1 und 15 %, bezogen auf das Gesamtgewicht der Zusammensetzung, liegt.

7. Zusammensetzung nach Anspruch 5 oder Anspruch 6, **dadurch gekennzeichnet, dass** die Gewichtskonzentration des Melaminderivats zwischen 7 und 13 %, bezogen auf das Gesamtgewicht der Zusammensetzung, liegt, dass die Gewichtskonzentration des Novolakharzes zwischen 10 und 20 %, bezogen auf das Gesamtgewicht der Zusammensetzung, liegt und dass die Gewichtskonzentration des Elastomers zwischen 0,1 % und 4 % liegt.

8. Zusammensetzung nach einem der vorangehenden Ansprüche, **dadurch gekennzeichnet, dass** das Melaminderivat aus der Gruppe ausgewählt ist, die Melamincyanurat, Melaminphosphat, Melamin-polyphosphate oder -pyrophosphate umfasst.

9. Zusammensetzung nach Anspruch 8, **dadurch gekennzeichnet, dass** das Melaminderivat Melaminpolyphosphat ist.

10. Zusammensetzung nach einem der vorangehenden Ansprüche, **dadurch gekennzeichnet, dass** sie einen Verstärkungsfüllstoff, ausgewählt aus der Gruppe bestehend aus Glasfasern, Mineralfasern, organischen hitzebeständigen Fasern, umfasst.

11. Zusammensetzung nach einem der vorangehenden Ansprüche, **dadurch gekennzeichnet, dass** das Flammhemmsystem eine Mono-, Di- oder Polycarbonsäure umfasst.

12. Zusammensetzung nach Anspruch 11, **dadurch gekennzeichnet, dass** die Mono-, Di- oder Polycarbonsäure in einer Gewichtskonzentration von 0,01 % bis 3 %, bezogen auf das Polyamidharz, vorliegt.

13. Zusammensetzung nach Anspruch 11 oder Anspruch 12, **dadurch gekennzeichnet, dass** die genannte Säure aus der Gruppe, umfassend Myristinsäure, Palmitinsäure, Stearinsäure, Behensäure, Benzoesäure, Salicylsäure, Oxalsäure, Malonsäure, Bernsteinsäure, Glutarsäure, Adipinsäure, Pimelinsäure, Decandisäure, Dodecandisäure, Isophthalsäure, Terephthalsäure, Trimesinsäure, ausgewählt ist.

14. Artikel, der durch Formen unter Verwendung einer Zusammensetzung nach einem der Ansprüche 1 bis 13 erhalten wurde.
